# EUROPÄISCHE PATENTSCHRIFT

(11) **EP 2 759 822 B1**
(45) Veröffentlichungstag und Bekanntmachung des Hinweises auf die Patenterteilung: **22.03.2017**
(21) Anmeldenummer: 13188929.7
(22) Anmeldetag: 16.10.2013
(51) Int. Cl.: G01M 1/14, G01M 1/30, G01B 11/24

(54) **Verfahren und Vorrichtung zum Bestimmen einer Bearbeitungsachse**
Method and device for determining an axes for machining
Procédé et dispositif destinés à déterminer un axe d'usinage

(30) Priorität: 29.01.2013 DE 102013100899
(43) Veröffentlichungstag der Anmeldung: 30.07.2014
(73) Patentinhaber: Schenck RoTec GmbH, 64293 Darmstadt (DE)
(72) Erfinder: Rogalla, Martin, 64297 Darmstadt (DE)
(74) Vertreter: Haar, Lucas Heinz Jörn

(56) Entgegenhaltungen:
- EP-A1- 2 184 595
- JP-A- H1 062 144
- JP-A- 2009 020 009

## Beschreibung

Die Erfindung betrifft ein Verfahren zum Bestimmen der Position für eine Bearbeitungsachse eines drehbaren Werkstückrohlings, insbesondere einer Kurbelwelle, der durch Materialabtragung zu bearbeitende und unbearbeitet bleibende Werkstückbereiche aufweist und dessen nominale Masseverteilung bekannt ist, mit Hilfe einer Messvorrichtung, welche in der Lage ist, die räumliche Position von Werkstückoberflächenpunkten zu messen.

Ein Verfahren zum Messen der Lage der Massenträgheitsachse eines zur Rotation bestimmten Werkstücks mittels einer Wuchtzentriermaschine ist aus DE 28 23 219 C2 bekannt. Hierbei wird das Werkstück in einer durch seine geometrische Form vorbestimmten Anfangslage in einer Maschine aufgenommen und um eine Drehachse der Aufnahme gedreht. Während das Werkstück rotiert, wird die vorhandene Unwucht gemessen und die Lage der Massenträgheitsachse des Werkstücks in Bezug auf die gegebene Drehachse bestimmt. In einem weiteren Schritt wird die Lagerung des Werkstücks dann so verändert, dass die gegebene Drehachse und die Massenträgheitsachse übereinstimmen. In dieser Lage werden dann Zentrierbohrungen oder analoge Zentriermittel an dem Werkstück angebracht, die der Aufnahme des Werkstücks in den sich anschließenden Bearbeitungsprozessen dienen..

Aus EP 0 268 724 B1 ist ein Verfahren zum wuchtenden Zentrieren von teilweise spanend zu bearbeitenden Werkstücken, insbesondere Kurbelwellen, bekannt, bei welchem das Werkstück vor der Bearbeitung bezüglich seiner Drehachse im Sinne einer Unwuchtverminderung querverlagert und mit die gewuchtete Zentrumslage festlegenden Zentrierbohrungen versehen wird. Für die Bestimmung von Größe und Richtung der Querverlagerung des Werkstücks werden hierbei die durch die zu bearbeitenden Werkstückbereiche bedingten Unwuchten missachtet und nur die Unwuchten herangezogen, die durch die unbearbeitet bleibenden Werkstückbereiche bedingt sind. Die aufgrund der Querverlagerung des Werkstücks mit den Zentrierbohrungen fixierte Drehachse läuft daher lediglich in Bezug auf die unbearbeitet bleibenden Werkstückteile wuchtend. Da die Werkstückbearbeitung auf die durch die Zentrierbohrung bestimmte Drehachse ausgerichtet ist, wird ein Vorwuchten erzielt. Die unbearbeitet bleibenden Werkstückbereiche werden hierbei in ihren vorhandenen Außenformen durch Sensoren, die auf einzelne ausgewählte Bezugspunkte der Werkstückoberfläche ausgerichtet sind, vermessen und einem Rechner eingegeben, der diese Ist-Formen mit den Soll-Formen eines idealen Werkstücks vergleicht und die Werkstückverlagerung in Abhängigkeit von der jeweiligen Abweichung zwischen Ist- und Soll-Formen und unter Berücksichtigung der vorgesehenen Materialzugaben berechnet. Das bekannte Verfahren erfordert sehr aufwändige Messeinrichtungen, um die Vermessung der unbearbeitet bleibenden Werkstückbereiche mit der erforderlichen Genauigkeit vornehmen zu können.

Bei einem in JP 2009 020009 A beschriebenen Verfahren wird ein drehbares Rohteil in einer Vorrichtung aufgenommen, in welcher die Position des Rohteils eingestellt werden kann. Mittels einer dreidimensionalen Formmesseinrichtung, die eine Kamera, einen Laserstrahl oder ähnliches verwendet, wird durch Abstandsmessung nach den Prinzip einer Triangulation die dreidimensionale Form des Rohteils gemessen und in Form digitaler Daten ausgegeben, Eine Bildberechnungseinheit erzeugt aus den gemessenen Daten ein körperliches 3-D-Modell und extrahiert den Teil des körperlichen 3-D-Modells, dessen Form in dem aus dem Rohteil gewonnenen Endprodukt erhalten bleibt. Eine Berechnungseinheit führt danach mittels des extrahierten Teils eine Auswuchtsimulation durch und berechnet die Schwerpunktlage und die Position der Zentrierachse, für die bei Drehung der endgültigen Produktform die Unwucht minimal ist. Mit Hilfe der Positioniervorrichtung wird dann das Rohteil in die berechnete zentrische Lage gebracht und zentriert.

Es ist weiterhin aus EP 2 184 595 A1 ein Verfahren zur Bestimmung der Position von Zentrierbohrungen, die in eine Kurbelwelle gebohrt werden, bekannt, bei welchen die Außenfläche der Kurbelwelle gemessen und dreidimensionale Formdaten erfasst werden, beruhend auf diesen Formdaten eine Position der Zentrierbohrung in der Kurbelwelle angenommen wird, basierend auf der Annahme der Position der Zentrierbohrung als Bezugsgröße eine vorbestimmte Bearbeitung der Kurbelwelle simuliert und dann eine der simulierten Bearbeitung entsprechende Form der Kurbelwelle bestimmt wird. Anschließen wird in einem Auswuchtentscheidungsschritt geprüft, ob die Größe der Unwucht der Kurbelwelle in der nach simulierter Bearbeitung erreichten Form innerhalb eines vorgegebenen, zugelassenen Bereichs liegt oder nicht, und in einem Zentrierbohrungs-Entscheidungsschritt wird die angenommene Position der Zentrierbohrung als gültige Bohrposition bestimmt, wenn der Unwuchtwert innerhalb des zulässigen Bereichs liegt.

JP H10 62144 A beschreibt ein Verfahren, bei welchem die Form der Ausgleichsgewichte einer Kurbelwelle an mehreren Punkten gemessen und mit den entsprechenden Punkten der nominalen Kontur der Kurbelwelle verglichen wird, um eine Unterfüllung oder andere Formfehler festzustellen.

Der Erfindung liegt die Aufgabe zugrunde, ein Verfahren der eingangs genannten Art anzugeben, das eine genaue Bestimmung der Zentrierpunkte zur Festlegung einer Bearbeitungsachse eines Werkstückrohlings ermöglicht, die zu minimaler Unwucht des bearbeiteten Werkstückrohlings führt. Das Verfahren soll darüber hinaus einfach und schnell durchführbar sein und zu seiner Durchführung keine komplizierten und teuren Vorrichtungen benötigen. Für das Bestimmen der Zentrierpunkte von Werkstückrohlingen sollen kurze Taktzeiten erreichbar sein.

Der Erfindung liegt weiterhin die Aufgabe zugrunde, eine vorteilhafte Vorrichtung zur Durchführung des Verfahrens zur Verfügung zu stellen.

Die genannte Aufgabe wird hinsichtlich des Verfahrens durch in Anspruch 1 angegebenen Merkmalen gelöst. Vorteilhafte Weiterbildungen des Verfahrens sind in den Ansprüchen 2 bis 8 angegeben.

Hinsichtlich der Vorrichtung wird die Aufgabe durch die in Anspruch 9 angegebenen Merkmalen gelöst. Vorteilhafte Ausgestaltungen der Vorrichtung sind in den Ansprüchen 10 bis 18 angegeben.

Nach der Erfindung umfasst das Verfahren zum Bestimmen der Position der stirnseitigen Zentrierpunkte für eine Bearbeitungsachse eines drehbaren Werkstückrohlings, der durch Materialabtragung zu bearbeitende und unbearbeitet bleibende Werkstückbereiche aufweist und dessen nominale Massenverteilung bekannt ist, mit Hilfe einer Messvorrichtung, die in der Lage ist, die räumliche Position von Werkstückoberflächenpunkten zu messen, die Schritte:
Aufnehmen eines Referenzwerkstücks in die Einlagerungsstellen der Messvorrichtung,
Messen der Position von vielen Punkten von unbearbeitet bleibenden Oberflächenbereichen des Referenzwerkstücks relativ zu einer in der Messvorrichtung bestimmten Unwuchtbezugsachse mit Hilfe der Messvorrichtung,
Abspeichern der gemessenen Positionsdaten der vielen Punkte von unbearbeitet bleibenden Oberflächenbereichen des Referenzwerkstücks als Referenzteiloberfläche in einem Datenspeicher eines Rechners,
Entnehmen des Referenzwerkstücks aus der Messvorrichtung und Aufnehmen eines Werkstückrohlings in die Einlagerungsstellen der Messvorrichtung, Messen der Position von vielen Punkten von unbearbeitet bleibenden Oberflächenbereichen des Werkstückrohlings mit Hilfe der Messvorrichtung, Abspeichern der gemessenen Positionsdaten der vielen Punkte von unbearbeitet bleibenden Oberflächenbereichen des Werkstückrohlings als Rohteiloberfläche in dem Datenspeicher des Rechners,
Berechnen einer aus der Abweichung zwischen Rohteiloberfläche und Referenzteiloberfläche resultierenden Unwuchtwirkung relativ zur Unwuchtbezugsachse aus den gespeicherten Positionsdaten,
Ausdrücken der Unwuchtwirkung durch die Lage der Hauptträgheitsachse eines angenommenen Werkstücks mit nominaler Massenverteilung und
Berechnen der Bearbeitungsachse des Werkstückrohlings durch Hinzuaddieren eines Offsets zur Lage der Hauptträgheitsachse.
Der Offset kann zunächst als Nullwert angenommen und danach empirisch anhand von relativ zur bearbeiteten Werkstückachse gemessenen Unwuchten mehrerer mit nach dem Verfahren bestimmter Bearbeitungsachse gefertigter Werkstücke ermittelt und im Rechner gespeichert werden. Vorzugsweise kann die Lage der Bearbeitungsachse durch die Position von Zentrierpunkten ausgedrückt werden, die als Durchstoßpunkte der Bearbeitungsachse durch stirnseitige Ebenen des Werkstückrohlings, die orthogonal zur Unwuchtbezugsachse ausgerichtet sind, berechnet werden.

Der empirisch ermittelte Offset berücksichtigt eine Unwucht des Referenzwerkstücks in Bezug auf die in der Messvorrichtung bestimmte Unwuchtbezugsachse und Veränderungen, die der Werkstückrohling durch die anschließende Bearbeitung mit nach dem Verfahren bestimmter Bearbeitungsachse erfährt und wirkt diesen Einflüssen im Sinne einer Verminderung der Unwucht des fertig bearbeiteten Werkstücks entgegen.

Das Verfahren nach der Erfindung hat den Vorteil, sehr genaue Ergebnisse zu liefern, weil nur wenig voneinander abweichende Messobjekte, nämlich das Referenzwerkstück und ein Werkstückrohling bei Anwendung des gleichen Messverfahrens gemessen und die bei den Messungen gewonnenen Positionsdaten beider Messobjekte miteinander verglichen werden, wobei nur die Differenz zwischen den gewonnenen Positionsdaten in die weitere Berechnung eingeht. Aufgrund des Vergleichs der Positionsdaten werden durch den Messvorgang bedingte Einflüsse und Verzerrungen der diesen zugrunde liegenden Messwerte sowie Nullpunktabweichungen kompensiert und können daher die Messgenauigkeit nicht nennenswert beeinträchtigen. Da sich weiterhin das Referenzwerkstück und der Werkstückrohling nur durch die im Rahmen üblicher Fertigungstoleranzen liegenden Abweichungen voneinander unterscheiden, liefert der Vergleich der Positionsdaten relativ kleine Differenzwerte, so dass sich auch Ungenauigkeiten, die bei der Messung auftreten, nur in sehr geringem Maße auswirken können.

In der Praxis hat sich jedenfalls gezeigt, dass das Verfahren nach der Erfindung zu sehr vorteilhaften Ergebnissen führt. Es ergeben sich kleinere Streukreise an der Endauswuchtmaschine zum Auswuchten der fertig bearbeiteten Werkstücke. Die Messvorrichtung muss lediglich linear messen und reproduzierbare Messwerte für gleiche Messpositionen am Referenzwerkstück und am Werkstückrohling liefern. Kleinere Abweichungen der absoluten Größe der Messwerte wirken sich nur wenig aus, so dass eine exakte Kalibrierung der Messvorrichtung, wie sie für die Berechnung des Werkstückvolumens erforderlich wäre, entbehrlich ist. Die Mittelung über viele Messpunkte verringert die Genauigkeitsanforderungen an die Messvorrichtung zusätzlich. Es können daher kostengünstige Messvorrichtungen, beispielsweise nach dem Laserlichtschnittverfahren arbeitende 3D-Messsyteme für das Verfahren verwendet werden.

Nach einem weiteren Vorschlag der Erfindung kann die Berechnung der Unwuchtwirkung in der Weise erfolgen, dass diskrete Referenzpunkte der Referenzteiloberfläche gewählt werden, für jeden diskreten Referenzpunkt eine Teilunwuchtwirkung aufgrund der Abweichung zwischen der Rohteiloberfläche und dem Referenzpunkt ermittelt wird und die resultierende Unwuchtwirkung durch Summation über die Teilunwuchtwirkungen aller Referenzpunkte ermittelt wird. Auf diese Weise kann der Rechenaufwand klein gehalten und der Berechnungsgang vereinfacht werden.

Eine weitere vorteilhafte Weiterbildung des Verfahrens kann nach der Erfindung darin bestehen, dass eine nominale Teilunwuchtwirkung für jeden gewählten diskreten Referenzpunkt bei einer angenommenen, kleinen Nominalabweichung zwischen der Rohteiloberfläche und dem Referenzpunkt ermittelt und als Einflusskoeffizient des Referenzpunkts gespeichert wird und dass die reale Teilunwuchtwirkung für jeden diskreten Referenzpunkt durch Multiplikation des Einflusskoeffizienten des Referenzpunkts und der gemessenen Abweichung zwischen der Rohteiloberfläche und dem Referenzpunkt ermittelt wird.

Auf diese Weisekönnen die Einflussfaktoren der Referenzpunkte nach Messung des Referenzwerkstücks und Speicherung der Rohteiloberfläche im Vorhinein für jeden diskreten Referenzpunkt berechnet werden, so dass bei der anschließenden Bestimmung der Unwuchtwirkungen von Werkstückrohlingen nur noch die an den Referenzpunkten gemessenen Abweichungen mit den zugehörigen Einflusskoeffizienten zu multiplizieren sind. Der Rechenaufwand im Anschluss an die Messung der Rohteiloberflächen von Werkstückrohlingen wird auf diese Weise ganz erheblich verringert.

Die nominale Teilunwuchtwirkung für jeden diskreten Referenzpunkt kann nach der Erfindung als Lageabweichung der Hauptträgheitsachse eines angenommenen Werkstücks mit nominaler Masseverteilung ausgedrückt werden, beispielsweise als Exzentrizitätsänderungen der Hauptträgheitsachse in den Zentrierebenen. Die Summation der Teilunwuchtwirkungen der einzelnen Referenzpunkte führt dann unmittelbar zur Bestimmung einer Lage der Hauptträgheitsachse, die nur noch durch Hinzuaddieren eines empirisch ermittelten Offsets zu korrigieren ist.

Als Referenzwerkstück kann ein beliebiger Werkstückrohling von einer Serie zu messender gleichartiger Werkstückrohlinge ausgewählt werden. Es ist jedoch von Vorteil, wenn als Referenzwerkstück ein Werkstückrohling ausgewählt wird, bei dem die Form der unbearbeitet bleibenden Werkstückbereiche in der Mitte der herstellungsbedingten Formabweichungen liegt. Hierdurch bleiben die Abweichungen zwischen der Referenzteiloberfläche und den Rohteiloberflächen der zu messenden Werkstückrohlinge verhältnismäßig klein, was zur Genauigkeit der Zentrierpunktbestimmung beiträgt. Weiterhin ist es vorteilhaft, wenn das Referenzwerkstück aus einem Werkstückrohling hergestellt wird, der eine sehr kleine Urunwucht hat.

Zur Herstellung des Referenzwerkstücks kann nach der Erfindung bei einem ausgewählten Werkstückrohling durch Wuchtzentrieren die optimale Lage für die Bearbeitungsachse bestimmt und gegebenenfalls nach Anbringen der entsprechenden Zentrierbohrungen kann durch anschließendes Bearbeiten der Werkstückrohling mit zur Bearbeitungsachse konzentrischen Lagerflächen für die Einlagerung in der Messvorrichtung versehen werden. Vorzugsweise können die Lagerflächen eine harte, verschleißfeste Oberfläche erhalten. Das auf diese Weise hergestellte Referenzwerkstück kann mit seinen Lagerflächen in einer Auswuchtmaschine aufgenommen und die Lage seiner Hauptträgheitsachse gemessen werden. Weicht die Lage der Hauptträgheitsachse von der durch die Einlagerung in der Messvorrichtung bestimmten Unwuchtbezugsachse ab, so ist diese Lageabweichung bzw. die dieser entsprechende Unwucht bei dem Verfahren nach der Erfindung zur berechneten Lage der Hauptträgheitsachse hinzu zu addieren, beispielsweise durch Einfügen in den zu addierenden Offset.

Nach der Erfindung umfasst eine vorteilhafte Vorrichtung zur Durchführung des Verfahrens ein Referenzwerkstück, eine Messvorrichtung mit Einlagerungsstellen zum Aufnehmen des Referenzwerkstücks oder eines Werkstückrohlings, einer Abtasteinrichtung zum Messen der Position von vielen Punkten von unbearbeitet bleibenden Oberflächenbereichen des Referenzwerkstücks und des Werkstückrohlings und mit einer der Abtasteinrichtung zugeordneten Unwuchtbezugsachse, einen Rechner mit einem Datenspeicher zum Abspeichern gemessener Positionsdaten von vielen Punkte der unbearbeitet bleibenden Oberflächenbereiche als Referenzteiloberfläche des Referenzwerkstücks und als Rohteiloberfläche des Werkstückrohlings, wobei der Rechner eingerichtet ist um aus den gespeicherten Positionsdaten eine aus der Abweichung zwischen Rohteiloberfläche und Referenzteiloberfläche resultierende Unwuchtwirkung relativ zur Unwuchtbezugsachse zu berechnen, die Unwuchtwirkung durch die Lage der Hauptträgheitsachse eines angenommenen Werkstücks mit nominaler Massenverteilung auszudrücken, zur Lage der Hauptträgheitsachse einen Offset hinzu zu addieren, welcher empirisch anhand der relativ zur Bearbeitungsachse gemessenen Istunwuchten von zuvor gefertigten Werkstücken ermittelt und gespeichert wurde. Der Rechner kann nach der Erfindung auch zur Berechnung von Zentrierpunkten als Durchstoßpunkte der Bearbeitungsachse durch orthogonal zur Unwuchtbezugsachse ausgerichtete, stirnseitige Ebenen des Werkstückrohlings eingerichtet sein. Die Berechnung der Zentrierpunkte des Werkstückrohlings kann aber auch in einem Rechner einer Zentrierbohrmaschine zum Bohren von die Bearbeitungsachse im Werkstückrohling festlegenden Zentrierbohrungen erfolgen.

Die Erfindung wird nachfolgend anhand von Ausführungsbeispielen näher erläutert, die in der Zeichnung dargestellt sind. Es zeigen
- Figur 1: eine Vorrichtung nach der Erfindung,
- Figur 2: die Vorrichtung gemäß Figur 1 bei der Messung eines Referenzwerkstücks und
- Figur 3: eine Ansicht eines Referenzwerkstücks.

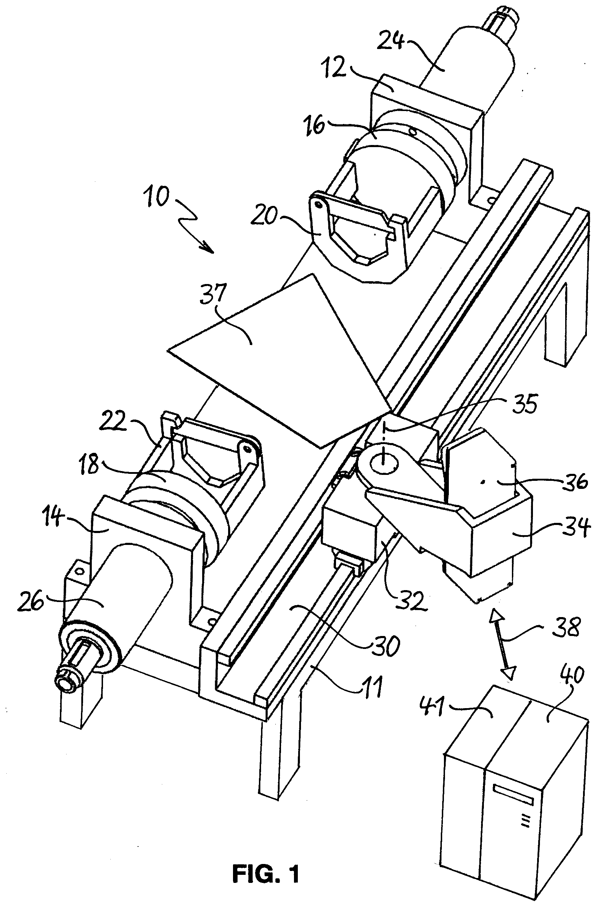

Die in Figur 1 dargestellte Messvorrichtung 10 weist zwei auf einem Maschinengestell 11 in einem Abstand voneinander angeordnete Lagergehäuse 12, 14 auf. In beiden Lagergehäusen 12, 14 ist jeweils eine Spindel drehbar gelagert, die an einem aus dem Lagergehäuse 12, 14 herausragenden, der Mitte des Maschinengestells 11 zugekehrten Ende einen Spindelkopf 16, 18 in Form einer zylindrischen Scheibe trägt. An den einander zugekehrten Seiten der Spindelköpfe 16, 18 sind mit einer Spannvorrichtung versehene Aufnahmen 20, 22 für die Lagerzapfen oder Lagerflansche eines Werkstücks angeordnet. Die Aufnahmen 20, 22 können auf verschiedene Weise ausgestaltet sein, sie können radial verstellbare Prismen haben oder als Mehrbackenfutter oder Spannzange ausgebildet sein. Beide Spindeln können mit Hilfe von Motoren 24, 26 drehend angetrieben werden. Die Motoren 24, 26 sind mechanisch oder durch eine elektrische Schaltung so miteinander gekuppelt, dass sie synchron bewegbar sind. Der Motor 26 ist mit einem Drehwinkelgeber versehen, der die Drehwinkelstellung des von dem Motor 26 angetriebenen Spindelkopfes erfasst. Die Spindeln und Spindelköpfe 16, 18 sind koaxial zueinander ausgerichtet.

Neben den Lagergehäusen 12, 14 ist an dem Maschinengestell 11 eine Führungsschiene 30 befestigt, auf der ein Schlitten 32 parallel zu der den Spindeln gemeinsamen Achse bewegbar gelagert ist. Der Schlitten 32 enthält einen Antriebsmotor, durch den er längs der Führungsschiene 30 bewegt werden kann. Durch ein Wegmesssystem kann die jeweilige Schlittenposition gemessen werden. An dem Schlitten 32 ist ein Halter 34 um eine Achse 35 schwenkbar gelagert. Die Achse 35 befindet sich in einer zur Drehachse der Spindeln senkrechten Ebene. An dem Halter 34 ist eine Sensoreinrichtung 36 befestigt, die zur optischen dreidimensionalen Erfassung eines Körpers in der Lage ist. Die Sensoreinrichtung 36 arbeitet nach dem Laserlichtschnittverfahren. Ihr Messbereich 37 ist durch eine Fläche veranschaulicht. Eine Datenübertragungseinrichtung 38, die mit einem Doppelpfeil angedeutet ist, verbindet die Sensoreinrichtung 36 mit einem programmierbaren elektronischen Rechner 40 und einem an diesen angeschlossenen Datenspeicher 41. Die Datenübertragungseinrichtung 38 kann drahtlos oder auch kabelgebunden ausgeführt sein. Der Rechner 40 ist außerdem dazu eingerichtet, die Motore 24, 26 sowie den Antrieb des Schlittens 32 und des Halters 34 zu steuern und das Signal des Drehwinkelgebers des Motors 26 zu empfangen und zu verarbeiten.

Anstelle der dargestellten, drehbaren Sensoreinrichtung 36 können nach der Erfindung auch zwei oder mehr feststehende Sensoreinrichtungen an dem Schlitten 32 befestigt sein, die gleichzeitig in verschiedenen Richtungen auf das Werkstück gerichtet sind, so dass jede Sensoreinrichtung eine andere Seite des Werkstücks erfassen kann. Dies ist zwar mit höheren Kosten verbunden, hat aber den Vorteil, dass man den Schwenkwinkel der einen Sensoreinrichtung nicht reproduzieren muss und die Messung weniger Zeit benötigt.

Bei der dargestellten Messvorrichtung 10 ist die Unwuchtbezugsachse für die Berechnung der Unwuchtwirkungen durch die gemeinsame Drehachse der Spindelköpfe 16, 18 bestimmt. Der Messbereich 37 der Sensoreinrichtung 36 erstreckt und bewegt sich vorzugsweise in einer Ebene, in der die Drehachse liegt. Eine optische Erfassung der Werkstückoberflächen kann aber auch ohne Drehung der Werkstücke mittels mehrerer Sensoren erfolgen. Hierbei kann die Unwuchtbezugsachse von einer Geraden gebildet sein in der sich die Mitten oder Mittelebenen der Messbereiche der Sensoren schneiden.

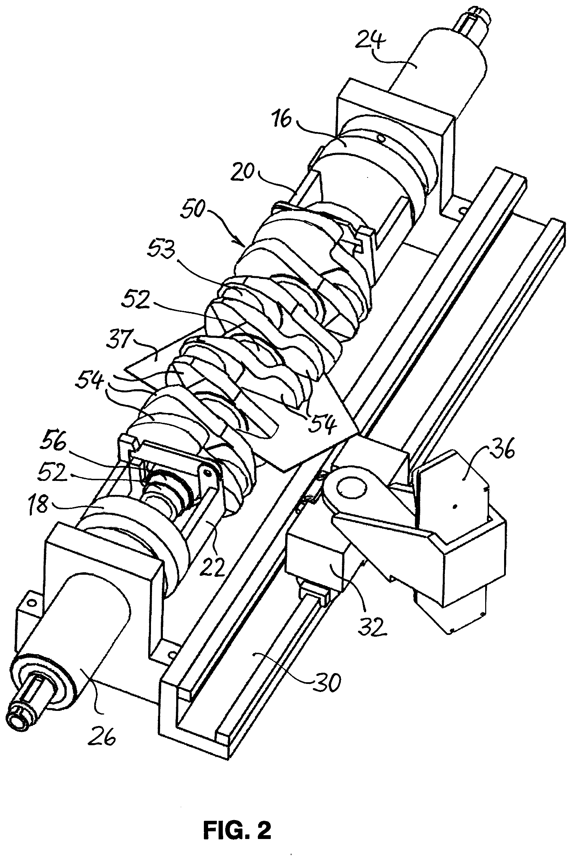

Figur 2 zeigt die Messvorrichtung 10 während eines Messvorgangs. In den Aufnahmen 20, 22 an den Spindelköpfen 16, 18 befindet sich ein Referenzwerkstück 50 in Form einer Kurbelwelle mit Lagerzapfen 52, Kurbelzapfen 53 und Kurbelwangen 54. Bei einer solchen Kurbelwelle werden nur die Lagerzapfen 52 und die Kurbelzapfen 53 materialabtragend bearbeitet. Die Oberflächen der Kurbelwangen 54 bleiben hingegen unbearbeitet. Bei dem Referenzwerkstück 50 sind nur die Lagerzapfen 52 an den beiden Enden bearbeitet und mit zylindrischen Lagerflächen 56 versehen, die zur Ausrichtung des Referenzwerkstücks 50 in den Aufnahmen 20, 22 der Messvorrichtung 10 dienen und die Unwuchtbezugsachse für das Referenzwerkstücks 50 festlegen. Eine Bearbeitung der anderen Lagerzapfen 52 und der Kurbelzapfen 53 ist nicht erforderlich, wäre aber auch nicht schädlich.

Die Aufnahmen 20, 22 der Messvorrichtung sind so ausgebildet, dass durch Einlagerung des Referenzwerkstücks 50 mit den Lagerflächen 56 die Lagerachse des Referenzwerkstücks 50 mit der in der Messvorrichtung die Unwuchtbezugsachse bestimmenden Drehachse der Spindeln und Spindelköpfe 16, 18 zusammenfällt. Mit Hilfe der Sensoreinrichtung 36 kann die Lage der Lagerflächen 56 und der zylindrischen Außenflächen der Spindelköpfe 16, 18 gemessen und durch Berechnen und Vergleich der Lage ihrer Achsen die Zentrierung des Referenzwerkstücks 50 in den Aufnahmen 20, 22 überprüft werden. Zeigt die Überprüfung eine Lageabweichung zwischen der der Unwuchtbezugsachse und der Lagerachse des Referenzwerkstücks 50, so kann mit Hilfe von Justiermitteln, die an den Aufnahmen 20, 22 vorgesehenen sind, die Lage des Referenzwerkstücks 50 korrigiert werden.

Nach dem Aufnehmen und Festspannen des Referenzwerkstücks 50 in der Messvorrichtung 10 können die unbearbeitet bleibenden Oberflächenbereiche des Referenzwerkstücks 50 vermessen werden. Hierzu wird das Referenzwerkstück 50 durch Ansteuerung der Motore 24, 26 langsam gedreht. Gleichzeitig wird die Sensoreinrichtung 36 mit Hilfe des Schlittens 32 in einer ersten, z.B. der in Figur 2 gezeigten Winkelstellung in einer ersten Richtung an dem Referenzwerkstück 50 entlang bewegt, wobei der Umfang und eine Seite der Kurbelwangen von dem Messbereich 37 erfasst wird. Danach wird die Sensoreinrichtung in eine zweite, z.B zur ersten Winkelstellung in Bezug auf eine radiale Ebene symmetrische Winkelstellung geschwenkt und in der entgegengesetzten Richtung an dem Referenzwerkstück 50 entlang bewegt, wobei neben dem Umfang die andere Seite der Kurbelwangen erfasst wird. Während der Bewegungen werden die Positionen einer Vielzahl von Punkten der unbearbeitet bleibenden Oberflächenbereiche der Kurbelwangen 54 gemessen und die Messdaten an den Rechner übertragen. Der Rechner 40 berechnet aus den Messdaten der Sensoreinrichtung 36 und diesen zugeordneten Drehwinkeldaten des Drehwinkelgebers dreidimensionale Positionsdaten und speichert diese als Referenzteiloberfläche in dem Datenspeicher 41 ab.

In der beschriebenen Weise kann anschließend ein Werkstückrohling in der Messvorrichtung 10 aufgenommen, vermessen und das Ergebnis der Messung als Rohteiloberfläche in dem Datenspeicher 41 gespeichert werden.

Anhand der gespeicherten Positionsdaten der Referenzteiloberfläche und der Rohteiloberfläche kann dann die optimale Position jedes der Zentrierpunkte für die Anbringung der Zentrierbohrungen an dem Werkstückrohling berechnet werden. Das Programm des Rechner 40 vergleicht hierzu eine Vielzahl diskreter Referenzpunkte der Referenzteiloberfläche mit der Rohteiloberfläche, wobei für jeden Referenzpunkt die kleinste Abweichung der Rohteiloberfläche gegenüber dem Referenzpunkt berechnet wird. Ist beispielsweise die Rohteiloberfläche gegenüber einem Referenzpunkt erhaben, so kann man das Volumen der erhabenen Stelle, beispielsweise als kleine Pyramide oder Kugelkappe, berechnen und aus dem Volumen und den vorhandenen Daten zum Werkstücksrohling die Masse, ihre Schwerpunktslage und somit ihre Unwuchtteilwirkung, d.h. die durch die Abweichung dieser Stelle der Rohteiloberfläche gegenüber der Referenzteiloberfläche bewirkte Änderung der Unwucht, berechnen.

Die gleiche Berechnung wird für alle gewählten Referenzpunkte ausgeführt und die dabei ermittelten Unwuchtteilwirkungen werden dann zu einer gesamten Unwuchtwirkung summiert. Die berechnete gesamte Unwuchtwirkung kann in die Lage der Hauptträgheitsachse eines angenommenen Werkstücks umgerechnet werden, das die nominale Massenverteilung des Werkstückrohlings hat.

Die berechnete Lage der Massenträgheitsachse eignet sich jedoch noch nicht als Bearbeitungsachse für den Werkstückrohling, da Veränderungen des Werkstückrohlings durch den sich anschließenden Bearbeitungsprozess, Nullpunktverlagerungen und eine eventuell vorhandene Unwucht des Referenzwerkstücks noch berücksichtigt werden müssen. Es hat sich daher als vorteilhaft erwiesen, wenn zur Lage der Hauptträgheitsachse ein Offset hinzuaddiert wird, der anhand von relativ zur Bearbeitungsachse gemessenen Unwuchten mehrerer, aus Werkstückrohlingen des gleichen Typs gefertigter Werkstücke ermittelt und im Rechner gespeichert wurde. Nach Hinzuaddieren des Offsets ist die Lage der Bearbeitungsachse bestimmt und es können die Positionen von Zentrierpunkten als Durchstoßpunkte der Bearbeitungsachse durch zur Unwuchtbezugsachse orthogonale Ebenen berechnet werden, die an den zu bearbeitenden Stirnseiten des Werkstückrohlings liegen.

Die Positionsdaten der Zentrierpunkte werden an eine Zentrierbohrmaschine übertragen, in welche der Werkstückrohling nach seiner Entnahme aus der Messvorrichtung eingelegt wird, um die Zentrierbohrungen an den dafür berechneten Stellen anzubringen. Die Einlagerung der Zentrierbohrmaschine ist vorzugsweise so gestaltet, dass die räumliche Lage des Werkstückrohlings in Bezug auf die Aufnahmeachsen der Messvorrichtung und der Zentrierbohrmaschine jeweils gleich ist.

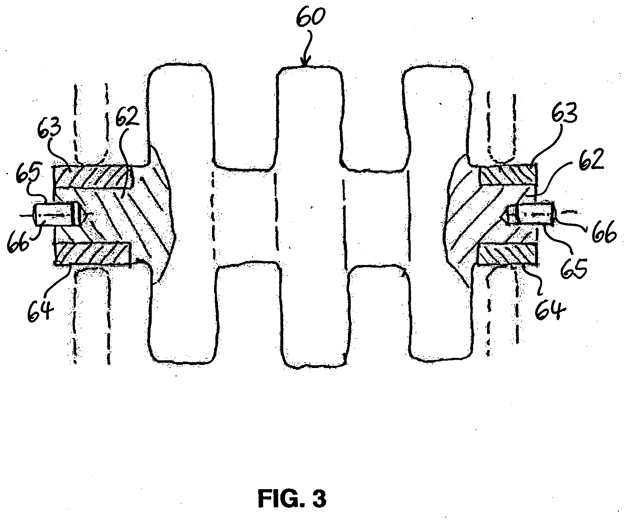

Figur 3 zeigt ein Beispiel eines Referenzwerkstücks 60, das aus einem ausgewählten Werkstückrohling einer Serie von Werkstücken des gleichen Typs hergestellt ist. Bei der Auswahl des Werkstückrohlings für das Referenzwerkstück 60 ist von Vorteil, wenn die Abmessungen des Werkstückrohlings im Mittelfeld der geltenden Fertigungstoleranzen liegen, damit die möglichen Abweichungen der mit dem Referenzwerkstück 60 zu vergleichenden Werkstückrohlinge nicht zu groß werden. Das Referenzwerkstück 60 ist nur an den endseitigen Lagerzapfen 62 bearbeitet, da diese der Einlagerung in der Messvorrichtung 10 dienen. Alle übrigen Abschnitte des Referenzwerkstücks 60 sind unbearbeitet. Für die Bearbeitung der Lagerzapfen wurde das Referenzwerkstück 60 wuchtzentriert, um in Bezug auf die Bearbeitungsachse eine minimale Urunwucht zu erzielen. Da die Bearbeitungsachse des Referenzwerkstücks 60 möglichst genau mit der Unwuchtbezugsachse in der Messvorrichtung 10 übereinstimmen soll, ist es zweckmäßig, wenn die Lagerzapfen 62 eine verschleißfeste Oberfläche haben, damit die Aufnahme des Referenzwerkstücks 60 in der Messvorrichtung 10 gut reproduzierbar ist. Auf die zuvor abgedrehten Lagerzapfen 62 sind daher gehärtete Ringe 63 aufgepresst, die nach dem Aufpressen auf den Nominaldurchmesser geschliffen sind. In der Messvorrichtung 10 können die zylindrischen Lagerflächen 64 der Ringe von der Sensoreinrichtung 36 erfasst und ihre Mittelpunkte in den Zentrierebenen berechnet werden, um die Lage der Unwuchtbezugsachse zu erfassen. Die Unwuchtbezugsachse für die Berechnung der Unwuchtwirkung der einzelnen, mit dem Referenzwerkstück 60 zu vergleichenden Werkstückrohlinge ist daher durch das Referenzwerkstück 60 dauerhaft festgelegt.

Nach Fertigstellung des Referenzwerkstücks 60 wird seine Unwucht in Bezug auf die Bearbeitungsachse mittels einer Auswuchtmaschine gemessen. Der gemessene Unwuchtwert ist dann in die Berechnung der Zentrierpunkte einzubeziehen, beispielsweise indem er zum Offset addiert wird. Alternativ kann das Referenzwerkstück 60 auch durch Materialabtrag im Bereich der Lager- und Kurbelzapfen ausgewuchtet werden, so dass auf Berücksichtigung eines Unwuchtwerts bei der Berechnung verzichtet werden kann.

Das Referenzwerkstück 60 kann mit Vorteil auch zur Nullpunkteinstellung einer Zentrierbohrmaschine zum Bohren der Werkstückrohlinge verwendet werden. Hierzu können neben den gehärteten Ringen 63 an den Stirnflächen der Lagerzapfen 62 zusätzlich koaxiale zylindrische Messflächen 65 ausgebildet sein, die beim Einrichten der Zentrierbohrmaschine mit einer Messuhr besser abgetastet werden können. Die Messflächen 65 können von Passstiften 66 gebildet sein, die in zylindrische Abschnitte von Zentrierbohrungen eingepresst sind.

Die Erfindung ist nicht auf die beschriebenen Ausführungsbeispiele beschränkt. So kann beispielsweise das Werkstück in der Aufnahme der Messvorrichtung feststehend gehalten sein und die Sensoreinrichtung um das feststehende Werkstück herumgeführt werden. Anstelle einer Sensoreinrichtung können außerdem mehrere Sensoreinrichtungen um das Werkstück herum angeordnet sein, die längs des feststehenden Werkstücks verfahrbar sind.

## Patentansprüche

1. Verfahren zum Bestimmen einer Bearbeitungsachse eines drehbaren Werkstückrohlings, der durch Materialabtragung zu bearbeitende und unbearbeitet bleibende Werkstückbereiche aufweist und dessen nominale Masseverteilung bekannt ist, mit Hilfe einer Messvorrichtung (10), die in der Lage ist, die räumliche Position von Werkstückoberflächenpunkten zu messen, mit folgenden Schritten:
Aufnehmen eines Referenzwerkstücks (50, 60) in die Einlagerungsstellen der Messvorrichtung (10),
Messen der Position von vielen Punkten von unbearbeitet bleibenden Oberflächenbereichen des Referenzwerkstücks (50, 60) relativ zu einer in der Messvorrichtung (10) bestimmten Unwuchtbezugsachse mit Hilfe der Messvorrichtung (10),
Abspeichern der gemessenen Positionsdaten der vielen Punkte von unbearbeitet bleibenden Oberflächenbereichen des Referenzwerkstücks (50, 60) als Referenzteiloberfläche in einem Datenspeicher (41) eines Rechners (40),
Entnehmen des Referenzwerkstücks (50, 60) aus der Messvorrichtung (10).
Aufnehmen eines Werkstückrohlings in die Einlagerungsstellen der Messvorrichtung (10),
Messen der Position von vielen Punkten von unbearbeitet bleibenden Oberflächenbereichen des Werkstückrohlings mit Hilfe der Messvorrichtung (10),
Abspeichern der gemessenen Positionsdaten der vielen Punkte von unbearbeitet bleibenden Oberflächenbereichen des Werkstückrohlings als Rohteiloberfläche in dem Datenspeicher (41) des Rechners (40),
Berechnen einer aus der Abweichung zwischen Rohteiloberfläche und Referenzteiloberfläche resultierenden Unwuchtwirkung relativ zur Unwuchtbezugsachse aus den gespeicherten Positionsdaten,
Ausdrücken der Unwuchtwirkung durch die Lage der Hauptträgheitsachse eines angenommenen Werkstücks mit nominaler Massenverteilung und
Berechnen der Bearbeitungsachse durch Hinzuaddieren eines Offsets zur Lage der Hauptträgheitsachse, welcher Offset empirisch anhand von relativ zur bearbeiteten Werkstückachse gemessenen Unwuchten mehrerer, mit nach dem Verfahren bestimmter Bearbeitungsachse aus Werkstückrohlingen des gleichen Typs gefertigter Werkstücke ermittelt und im Rechner (40) gespeichert wird.

2. Verfahren gemäß Anspruch 1, **dadurch gekennzeichnet, dass** die Lage der Bearbeitungsachse durch die Position von Zentrierpunkten ausgedrückt wird, die als Durchstoßpunkt der Bearbeitungsachse durch stirnseitige Ebenen des Werkstückrohlings, die orthogonal zur Unwuchtbezugsachse ausgerichtet sind, berechnet werden.

3. Verfahren nach einem der Ansprüche 1 oder 2, **dadurch gekennzeichnet dass**, diskrete Referenzpunkte der Referenzteiloberfläche gewählt werden, für jeden diskreten Referenzpunkt eine Teilunwuchtwirkung aufgrund der Abweichung zwischen der Rohteiloberfläche und dem Referenzpunkt ermittelt wird und die resultierende Unwuchtwirkung durch Summation über die Teilunwuchtwirkungen aller Referenzpunkte ermittelt wird.

4. Verfahren nach Anspruch 3, **dadurch gekennzeichnet dass** eine nominale Teilunwuchtwirkung für jeden diskreten Referenzpunkt bei einer angenommenen, kleinen Nominalabweichung zwischen der Rohteiloberfläche und dem Referenzpunkt ermittelt und als Einflusskoeffizient des Referenzpunkts gespeichert wird und dass die reale Teilunwuchtwirkung für jeden diskreten Referenzpunkt durch Multiplikation des Einflusskoeffizienten des Referenzpunkts und der gemessenen Abweichung zwischen der Rohteiloberfläche und dem Referenzpunkt ermittelt wird.

5. Verfahren nach Anspruch 4, **dadurch gekennzeichnet dass** die nominale Teilunwuchtwirkung für jeden diskreten Referenzpunkt als Lageabweichung der Hauptträgheitsachse eines angenommenen Werkstücks mit nominaler Masseverteilung ausgedrückt wird.

6. Verfahren nach einem der vorhergehenden Ansprüche, **dadurch gekennzeichnet, dass** das Referenzwerkstück (50, 60) durch Bearbeitung eines Werkstückrohlings hergestellt wird, der eine sehr kleine Urunwucht hat.

7. Verfahren nach einem der vorhergehenden Ansprüche, **dadurch gekennzeichnet, dass** die Form der unbearbeitet bleibenden Werkstückbereiche des Referenzwerkstücks (50, 60) in der Mitte der herstellungsbedingten Formabweichungen liegt.

8. Verfahren nach einem der vorhergehenden Ansprüche, **dadurch gekennzeichnet, dass** die Unwuchtbezugsachse der Messvorrichtung (10) durch Messen der Lage von Lagerflächen (56) des Referenzwerkstücks (50) mittels der Messvorrichtung (10) erfasst wird

9. Vorrichtung zum Bestimmen der Bearbeitungsachse eines drehbaren Werkstückrohlings, der durch Materialabtragung zu bearbeitende und unbearbeitet bleibende Werkstückbereiche aufweist und dessen nominale Massenverteilung bekannt ist, umfassend
ein Referenzwerkstück (50, 60),
eine Messvorrichtung (10) mit Einlagerungsstellen zum Aufnehmen des Referenzwerkstücks (50, 60) oder eines Werkstückrohlings, mit einer Abtasteinrichtung zum Messen der Position von vielen Punkten von unbearbeitet bleibenden Oberflächenbereichen des Referenzwerkstücks (50, 60) und des Werkstückrohlings und mit einer der Abtasteinrichtung zugeordneten Unwuchtbezugsachse,
einen Rechner (40) mit einem Datenspeicher (41) zum Abspeichern gemessener Positionsdaten von vielen Punkte der unbearbeitet bleibenden Oberflächenbereiche als Referenzteiloberfiäche des Referenzwerkstücks (50, 60) und als Rohteiloberfläche des Werkstückrohlings,
wobei der Rechner (40) eingerichtet ist, um aus den gespeicherten Positionsdaten eine aus der Abweichung zwischen Rohteiloberfläche und Referenzteiloberfläche resultierende Unwuchtwirkung relativ zur Unwuchtbezugsachse zu berechnen,
die Unwuchtwirkung durch die Lage der Hauptträgheitsachse eines angenommenen Werkstücks mit nominaler Massenverteilung auszudrücken, und die Bearbeitungsachse durch Hinzuaddieren eines Offsets zur Lage der Hauptträgheitsachse zu berechnen, welcher Offset empirisch anhand von relativ zur bearbeiteten Werkstückachse gemessenen Unwuchten mehrerer, mit nach dem Verfahren bestimmter Bearbeitungsachse aus Werkstückrohlingen des gleichen Typs gefertigter Werkstücke ermittelt und im Rechner (40) gespeichert worden ist.

10. Vorrichtung nach Anspruch 9, **dadurch gekennzeichnet, dass** der Rechner zur Berechnung von Zentrierpunkten als Durchstoßpunkte der Bearbeitungsachse durch orthogonal zur Unwuchtbezugsachse ausgerichtete, stirnseitige Ebenen des Werkstückrohlings eingerichtet ist.

11. Vorrichtung nach einem der Ansprüche 9 oder 10, **dadurch gekennzeichnet, dass** die Abtasteinrichtung (10) eine drei dimensionale Formen berührungslos optisch erfassende Sensoreinrichtung (36) aufweist.

12. Vorrichtung nach einem der Ansprüche 9 bis 11, **dadurch gekennzeichnet, dass** die Einlagerungsstellen an einer drehbaren Spindel angeordnet sind und dass die Abtasteinrichtung der Messvorrichtung (10) in Richtung der Drehachse der Spindel bewegbar ist.

13. Vorrichtung nach einem der Ansprüche 9 bis 12, **dadurch gekennzeichnet, dass** die Spindel eine koaxiale Ringfläche aufweist, die im Erfassungsbereich der Abtasteinrichtung liegt.

14. Vorrichtung nach einem der Ansprüche 9 bis 13, **dadurch gekennzeichnet, dass** die Abtasteinrichtung um eine zur Drehachse der Spindel windschiefe Achse (35) schwenkbar ist.

15. Vorrichtung nach einem der Ansprüche 9 bis 14, **dadurch gekennzeichnet, dass** die Abtasteinrichtung an einem Schlitten (32) angeordnet ist, der an einer Führungsschiene (30) parallel zur Unwuchtbezugsachse bewegbar gelagert ist.

16. Vorrichtung nach Anspruch 15, **dadurch gekennzeichnet, dass** die Abtasteinrichtung wenigstens zwei Sensoreinrichtungen aufweist, die an dem Schlitten (32) befestigt sind und derart angeordnet sind, dass sie das Werkstück von zwei entgegengesetzten Seiten erfassen.

17. Vorrichtung nach einem der Ansprüche 9 bis 16, **dadurch gekennzeichnet, dass** das Referenzwerkstück (60) von gehärteten Ringen (63) gebildete Lagerflächen (64) aufweist.

18. Vorrichtung nach einem der Ansprüche 9 bis 17, **dadurch gekennzeichnet, dass** das Referenzwerkstück (60) an den Stirnseiten konzentrische Messflächen (65) zur Bestimmung der Unwuchtbezugsachse aufweist.

## Claims

1. A method of determining a machining axis of a rotary work blank which includes workpiece areas to be machined by stock removal and areas to be left unmachined and whose nominal mass distribution is known, by means of a measurement device (10) capable of measuring the spatial position of workpiece surface points, said method comprising the steps of:
Receiving a reference workpiece (50, 60) in the seats of the measurement device (10);
Measuring, by means of the measurement device (10), the position of a plurality of points of surface areas of the reference workpiece (50, 60) to be left unmachined relative to an imbalance reference axis determined in the measurement device (10);
Storing, in a data memory (41) of a computer (40), the measured position data of the plurality of points of surface areas of the reference workpiece (50, 60) to be left unmachined as reference partial surface;
Removing the reference workpiece (50, 60) from the measurement device (10);
Receiving a work blank in the seats of the measurement device (10);
Measuring, by means of the measurement device (10), the position of a plurality of points of surface areas of the work blank to be left unmachined;
Storing, in the data memory (41) of the computer (40), the measured position data of the plurality of points of surface areas of the work blank to be left unmachined as blank partial surface;
Computing, from the stored position data, an imbalance effect relative to the imbalance reference axis which results from the deviation between blank partial surface and reference partial surface;
Expressing the imbalance effect by the position of the main inertia axis of an assumed workpiece having nominal mass distribution; and
Computing of the machining axis by adding an offset to the position of the main inertia axis, which offset is determined empirically with reference to imbalances, measured relative to the machined workpiece axis, of a plurality of workpieces manufactured with a machining axis determined according to the method, and is stored it in the computer (40).

2. The method according to claim 1, **characterized by** expressing the position of the machining axis by the position of points of location which are computed as penetration points of the machining axis through work blank end planes aligned orthogonally to the imbalance reference axis.

3. The method according to any one of the claims 1 or 2, **characterized by** selecting discrete reference points of the reference partial surface, determining for each discrete reference point a partial imbalance effect on the basis of the deviation between the blank partial surface and the reference point, and determining the resulting imbalance effect by summation over the partial imbalance effects of all reference points.

4. The method according to claim 3, **characterized by** determining a nominal partial imbalance effect for each discrete reference point with an assumed small nominal deviation between the blank partial surface and the reference point and storing it as influencing coefficient of the reference point, and determining the real partial imbalance effect for each discrete reference point by multiplying the influencing coefficient of the reference point by the measured deviation between the blank partial surface and the reference point.

5. The method according to claim 4, **characterized by** expressing the nominal partial imbalance effect for each discrete reference point as position deviation of the main inertia axis of an assumed workpiece having nominal mass distribution.

6. The method according to any one of the preceding claims, **characterized by** manufacturing the reference workpiece (50, 60) by machining a work blank having a very small original imbalance.

7. The method according to any one of the preceding claims, **characterized in that** the shape of the workpiece areas of the reference workpiece (50, 60) left unmachined is midway between the form errors caused by the manufacturing process.

8. The method according to any one of the preceding claims, **characterized by** detecting the imbalance reference axis of the measurement device (10) by measuring the position of bearing surfaces (56) of the reference workpiece (50) by means of the measurement device (10).

9. A device for determining the machining axis of a rotary work blank which includes workpiece areas to be machined by stock removal and areas to be left unmachined and whose nominal mass distribution is known, comprising:
a reference workpiece (50, 60);
a measurement device (10) having seats for receiving the reference workpiece (50, 60) or a work blank, with a sensing device for measuring the position of a plurality of points of unmachined surface areas of the reference workpiece (50, 60) and the work blank, and with an imbalance reference axis allocated to the sensing device;
a computer (40) having a data memory (41) for storing measured position data of the plurality of points of the surface areas left unmachined as reference partial surface of the reference workpiece (50, 60) and as blank partial surface of the work blank,
wherein the computer (40) is configured to compute from the stored position data an imbalance effect relative to the imbalance reference axis which results from the deviation between blank partial surface and reference partial surface,
to express the imbalance effect by the position of the main inertia axis of an assumed workpiece having nominal mass distribution, and
to compute the machining axis by adding an offset to the position of the main inertia axis, which offset is determined empirically with reference to imbalances, measured relative to the machined workpiece axis, of a plurality of workpieces manufactured with a machining axis determined according to the method, and is stored it in the computer (40).

10. The device according to claim 9, **characterised in that** the computer is configured to calculate points of location as penetration points of the machining axis through work blank end planes aligned orthogonally to the imbalance reference axis.

11. The device according to any one of the claims 9 or 10, **characterized in that** the detecting device (10) includes a sensing device (36) for contactless optical detection of three-dimensional shapes.

12. The device according to any one of the claims 9 to 11, **characterized in that** the seats are arranged on a rotary spindle, and that the sensing device of the measurement device (10) is movable in the direction of the axis of rotation of the spindle.

13. The device according to any one of the claims 9 to 12, **characterized in that** the spindle includes a coaxial ring surface situated in the range of detection of the sensing device.

14. The device according to any one of the claims 9 to 13, **characterized in that** the sensing device is pivotal about an axis (35) skew to the axis of rotation of the spindle.

15. The device according to any one of the claims 9 to 14, **characterized in that** the sensing device is arranged on a slide (32) mounted for movement on a guide rail (30) parallel to the imbalance reference axis.

16. The device according to claim 15, **characterized in that** the sensing device includes at least two sensing means mounted on the slide (32) and arranged such as to cover the workpiece from two opposed sides.

17. The device according to any one of the claims 9 to 16, **characterized in that** the reference workpiece (60) includes bearing surfaces (64) formed by hardened rings (63).

18. The device according to any one of the claims 9 to 17, **characterized in that** the reference workpiece (60) includes on the end surfaces concentric measuring surfaces (65) for determining the imbalance reference axis.

## Revendications

1. Procédé pour déterminer un axe d'usinage d'une ébauche de pièce rotative qui comprend des zones de pièce destinées à être usinées par enlèvement de matériau et des zones de pièce demeurant non usinées et dont la distribution des masses nominale est connue, procédé réalisé à l'aide d'un dispositif de mesure (10) qui est apte à mesurer la position spatiale de points de surface de la pièce, comprenant les étapes suivantes :
la réception d'une pièce de référence (50, 60) dans les emplacements de stockage du dispositif de mesure (10),
la mesure, à l'aide du dispositif de mesure (10), de la position de nombreux points de zones de surface demeurant non usinées de la pièce de référence (50, 60) par rapport à un axe de référence de balourd déterminé dans le dispositif de mesure (10),
la mise en mémoire, dans une mémoire de données (41) d'un ordinateur (40), des données de position mesurées des nombreux points des zones de surface demeurant non usinées de la pièce de référence (50, 60) comme surface partielle de référence,
le prélèvement de la pièce de référence (50, 60) du dispositif de mesure (10), la réception d'une ébauche de pièce dans les emplacements de stockage du dispositif de mesure (10),
la mesure, à l'aide du dispositif de mesure (10), de la position de nombreux points de zones de surface demeurant non usinées de l'ébauche de pièce,
la mise en mémoire, dans la mémoire de données (41) de l'ordinateur (40), des données de position mesurées des nombreux points de zones de surface demeurant non usinées de l'ébauche de pièce en tant que surface partielle d'ébauche,
le calcul d'un effet de balourd résultant de l'écart entre la surface partielle d'ébauche et la surface partielle de référence par rapport à l'axe de référence de balourd à partir des données de position mises en mémoire,
l'expression de l'effet de balourd par la position de l'axe d'inertie principal d'une pièce admise présentant une distribution des masses nominale et le calcul de l'axe d'usinage par addition d'un décalage par rapport à la position de l'axe d'inertie principal, lequel décalage est déterminé de manière empirique sur la base de balourds, mesurés par rapport à l'axe de pièce usinée, de plusieurs pièces fabriquées à partir d'ébauches de pièces du même type ayant un axe d'usinage déterminé selon le procédé, et mis en mémoire dans l'ordinateur (40).

2. Procédé selon la revendication 1, **caractérisé en ce que** la position de l'axe d'usinage est exprimée par la position de points de centrage qui sont calculés en tant que points de traversée de l'axe d'usinage par les plans frontaux de l'ébauche de pièce qui sont orientés de façon orthogonale par rapport à l'axe de référence de balourd.

3. Procédé selon l'une des revendications 1 ou 2, **caractérisé en ce que** des points de référence discrets de la surface partielle de référencé sont sélectionnés, un effet de balourd partiel est déterminé pour chaque point de référence discret sur la base de l'écart entre la surface partielle d'ébauche et le point de référence et l'effet de balourd résultant est déterminé par sommation des effets de balourd partiels de tous les points de référence.

4. Procédé selon la revendication 3, **caractérisé en ce qu'**un effet de balourd partiel nominal est déterminé pour chaque point de référence discret dans le cas d'un faible écart nominal admis entre la surface partielle d'ébauche et le point de référence et est mis en mémoire en tant que coefficient d'influence du point de référence, et **en ce que** l'effet de balourd partiel réel est déterminé pour chaque point de référence discret par multiplication du coefficient d'influence du point de référence et de l'écart mesuré entre la surface partielle d'ébauche et le point de référence.

5. Procédé selon la revendication 4, **caractérisé en ce que** l'effet de balourd partiel nominal est exprimé pour chaque point de référence discret en tant qu'écart de position de l'axe d'inertie principal d'une pièce admise présentant une distribution des masses nominale.

6. Procédé selon l'une des revendications précédentes, **caractérisé en ce que** la pièce de référence (50, 60) est fabriquée par usinage d'une ébauche de pièce qui présente un balourd très faible.

7. Procédé selon l'une des revendications précédentes, **caractérisé en ce que** la forme des zones de pièce demeurant non usinées de la pièce de référence (50, 60) se situe au centre des écarts de forme imposés par la fabrication.

8. Procédé selon l'une des revendications précédentes, **caractérisé en ce que** l'axe de référence de balourd du dispositif de mesure (10) est déterminé par mesure de la position de surfaces d'appui (56) de la pièce de référence (50) au moyen du dispositif de mesure (10).

9. Dispositif pour déterminer l'axe d'usinage d'une ébauche de pièce rotative qui comprend des zones de pièce destinées à être usinées par enlèvement de matériau et des zones de pièce demeurant non usinées et dont la distribution des masses nominale est connue, comprenant une pièce de référence (50, 60),
un dispositif de mesure (10) comprenant des emplacements de stockage destinés à recevoir la pièce de référence (50, 60) ou une ébauche de pièce, comportant un dispositif de détection destiné à mesurer la position de nombreux points de zones de surface demeurant non usinées de la pièce de référence (50, 60) et de l'ébauche de pièce, et un axe de référence de balourd associé au dispositif de détection,
un ordinateur (40) comprenant une mémoire de données (41) destinée à la mise en mémoire de données de position mesurées de nombreux points des zones de surface demeurant non usinées en tant que surface partielle de référence de la pièce de référence (50, 60) et en tant que surface partielle d'ébauche de l'ébauche de la pièce,
l'ordinateur (40) étant conçu pour calculer à partir des données de position mises en mémoire un effet de balourd résultant de l'écart entre la surface partielle d'ébauche et la surface partielle de référence par rapport à l'axe de référence de balourd,
pour exprimer l'effet de balourd par la position de l'axe d'inertie principal d'une pièce admise présentant une distribution des masses nominale,
et pour calculer l'axe d'usinage par addition d'un décalage par rapport à la position de l'axe d'inertie principal, lequel décalage est déterminé de manière empirique sur la base de balourds mesurés par rapport à l'axe de pièce usinée de plusieurs pièces fabriquées à partir d'ébauches de pièces du même type ayant un axe d'usinage déterminé par le procédé, et mis en mémoire dans l'ordinateur (40).

10. Dispositif selon la revendication 9, **caractérisé en ce que** l'ordinateur est conçu pour calculer des points de centrage en tant que points de traversée de l'axe d'usinage par les plans frontaux de l'ébauche de pièce qui sont orientés de façon orthogonale par rapport à l'axe de référence de balourd.

11. Dispositif selon l'une des revendications 9 ou 10, **caractérisé en ce que** le dispositif de détection (10) comprend un dispositif de capteur (36) détectant optiquement et sans contact des formes tridimensionnelles,

12. Dispositif selon l'une des revendications 9 à 11, **caractérisé en ce que** les emplacements de stockage sont disposés sur une broche rotative, et **en ce que** le dispositif de détection du dispositif de mesure (10) est mobile en direction de l'axe de rotation de la broche.

13. Dispositif selon l'une des revendications 9 à 12, **caractérisé en ce que** la broche comprend une surface annulaire coaxiale qui se situe dans la zone de détection du dispositif de détection.

14. Dispositif selon l'une des revendications 9 à 13, **caractérisé en ce que** le dispositif de détection peut pivoter autour d'un axe (35) incliné par rapport à l'axe de rotation de la broche.

15. Dispositif selon l'une des revendications 9 à 14, **caractérisé en ce que** le dispositif de détection est disposé sur un chariot (32) qui est logé de manière à pouvoir se déplacer sur un rail de guidage (30) parallèlement à l'axe de référence de balourd.

16. Dispositif selon la revendication 15, **caractérisé en ce que** le dispositif de détection comprend au moins deux dispositifs de capteur qui sont fixés sur le chariot (32) et qui sont disposés de telle manière qu'ils détectent la pièce par deux faces opposées.

17. Dispositif selon l'une des revendications 9 à 16, **caractérisé en ce que** la pièce de référence (60) comprend des surfaces d'appui (64) formées par des bagues (63) durcies.

18. Dispositif selon l'une des revendications 9 à 17, **caractérisé en ce que** la pièce de référence (60) comprend sur les faces frontales des surfaces de mesure concentriques (65) destinées à déterminer l'axe de référence de balourd.
